# EUROPÄISCHE PATENTSCHRIFT

(11) **EP 2 294 764 B1**
(45) Veröffentlichungstag und Bekanntmachung des Hinweises auf die Patenterteilung: **23.04.2014**
(21) Anmeldenummer: 09753939.9
(22) Anmeldetag: 28.05.2009
(51) Int. Cl.: H04L 12/40, G06F 13/38, G06F 13/40, H01R 29/00

(54) **KOMMUNIKATIONSMODUL SOWIE VERFAHREN ZUR ANBINDUNG EINES ELEKTRISCHEN GERÄTES AN EIN NETZWERK**
COMMUNICATION MODULE AND METHOD FOR CONNECTING AN ELECTRICAL DEVICE TO A NETWORK
MODULE DE COMMUNICATION ET PROCÉDÉ POUR CONNECTER UN APPAREIL ÉLECTRIQUE À UN RÉSEAU

(30) Priorität: 28.05.2008 DE 102008002861
(43) Veröffentlichungstag der Anmeldung: 16.03.2011
(73) Patentinhaber: SCHNEIDER ELECTRIC AUTOMATION GMBH, 63500 Seligenstadt (DE)
(72) Erfinder: ZIMMERMANN, Achim, 63128 Dietzenbach (DE); HAMPIKIAN, Pascal, F-75010 Paris (FR); MIKSCH, Gernot, 63674 Altenstadt (DE)
(74) Vertreter: Stoffregen, Hans-Herbert
(86) Internationale Anmeldenummer: PCT/EP2009/056562
(87) Internationale Veröffentlichungsnummer: WO 2009/144284

(56) Entgegenhaltungen:
- WO-A1-2005/124569
- DE-A1- 4 300 661
- US-B1- 6 654 845
- US-B1- 6 701 406

## Beschreibung

Die Erfindung bezieht sich auf ein Kommunikationsmodul nach dem Oberbegriff des Patentanspruchs 1, sowie auf ein Verfahren zur Anbindung von elektrischen Geräten mittels jeweils individueller physikalischer Schnittstelle über ein Kommunikationsmodul an ein externes Netzwerk nach dem Oberbegriff des Patentanspruchs 7.

Ein Kommunikationsmodul sowie ein Verfahren zur Anbindung von elektrischen Geräten an ein externes Netzwerk ist in der WO-A-2005/124569 offenbart. Bei der bekannten Ausführungsform sind neben den physikalischen Schnittstellen wie serieller Schnittstelle UART oder paralleler Schnittstelle DPRM ein oder mehrere elektrische Verbinder in der elektrischen Schnittstelle angeordnet sowie eine Steuereinheit, die den Wert von einem oder mehreren Signalen bestimmt, die an den mindestens einen oder mehreren elektrischen Verbinder angelegt werden, um entweder eine serielle oder eine parallele Datenkommunikation über die elektrische Schnittstelle in Abhängigkeit von dem Wert des einen oder der mehreren Signale zu ermöglichen. Die zur Auswahl der geeigneten Schnittstelle verwendeten elektrischen Verbinder gehen der elektrischen Schnittstelle für die Datenübertragung verloren. Ferner ist aufgrund der vorgeschlagenen statischen Signalauswertung die Informationsübertragung begrenzt.

Die US-B-6,701,406 offenbart ein Netzwerk-Interface-Gerät zur Kopplung eines System-Host mit einer Vielzahl von Konfigurationen an ein Netzwerkmedium. Das Netzwerk-Interface-Gerät umfasst einen PCI-Interface zur Verbindung des Interface-Geräts mit einem Host-System, welches mit einem PCI-basierenden Systembus-Interface konfiguriert ist, sowie ein MII-Interface (Medium Independent Interface) zur Kopplung des Interface-Gerätes mit einem System-Host, welches mit einem MAC-Interface (Media Accesss Controller) konfiguriert ist sowie ein Buffer-Management-Gerät mit einem aktiven Status zur Übertragung von Datenpaketverkehr über das PCI-Interface, wenn das Interface-Gerät mit einem PCI-basierenden Systembus verbunden ist und einen passiven Status für kontinuierlichen Durchlass von Datenpaketen über das MII-Interface, wenn das Interface-Gerät mit einem MAC-basierenden Systembus-Interface verbunden ist.

Die DE-A-43 00 661 beschreibt eine Schaltungsanordnung zur Ankopplung eines Rechners an ein Controller-Netz zur Ausbildung eines Knotens ohne die Notwendigkeit, im Rechner selbst eine Anpassungskarte unterzubringen. Dabei ist vorgesehen, dass ein vom Rechner separat angeordnetes Vorschaltgerät an das Controller-Netz angeschlossen ist und über eine übliche serielle oder parallele Schnittstelle mit dem Rechner verbunden ist und dass das Vorschaltgerät zur Reduktion der auf den Rechner übertragenen Datenmenge durch Selektion von Daten und/oder Datenübernahme von einfachen Teilfunktionen des Knotens ausgelegt ist.

Modularisierung und Standardisierung von Schnittstellen innerhalb einer speziellen Produktfamilie sind Stand der Technik. Dies berücksichtigt aber nur die Anforderungen eines speziellen Produktes.

Davon ausgehend liegt der vorliegenden Erfindung die Aufgabe zu Grunde, ein Kommunikationsmodul sowie ein Verfahren der eingangs genannten Art derart weiterzubilden, dass die Kommunikationsmodule unabhängig von einzelnen Host-Geräten entwickelt werden können und für viele verschiedene Host-Geräte wieder verwendbar sind.

Die Aufgabe wird erfindungsgemäß durch ein Kommunikationsmodul mit den Merkmalen des Anspruch 1 gelöst.

Die Aufgabe wird verfahrensmäßig gemäß der Erfindung durch die Merkmale des Anspruchs 7 gelöst.

Anwendung findet das Kommunikationsmodul sowie das Verfahren in jedem Gerät, welches über ein externes Netzwerk kommunizieren können muss.

Dieses Gerät wird "Host-Gerät" genannt und kann in seine Hauptfunktion und die Kommunikationsfunktion (Modul oder Option) aufgespalten werden. Beide Teile sind über die Geräte Host-Schnittstelle zu verbinden.

Das Host-Gerät muss natürlich nur eine von mehreren Teilschnittstellen zur Verfügung stellen, während die Kommunikationsmodule alle vorzugsweise vier Schnittstellen zur Verfügung stellen müssen. Dadurch kann die Implementierung der Schnittstelle im Host-Gerät entsprechend den Anforderungen der Anwendung optimiert werden (Leistung versus Kosten) und trotzdem bleibt die Möglichkeit erhalten, aus einem großen Angebot an Kommunikations-Optionsmodulen zu wählen, die aber alle zur individuellen Schnittstelle passen.

Für Host-Geräte, welche eine Anbindung an ein oder mehrere Kommunikations-Netzwerke benötigen, besteht nicht mehr die Notwendigkeit, für jedes einzelne Netzwerk erneut eine Implementierung vorzunehmen, sondern lediglich einmalig die standardisierte Host-Schnittstelle zu implementieren und dann das benötigte Kommunikationsoptionsmodul aus einer Liste vorhandener Kommunikationsmodule auszuwählen. Dadurch kann der Gesamtentwicklunasaufwand reduziert werden. Auch können die Eigenschaften je Netzwerk über verschiedene Produkte hinweg harmonisiert werden.

Die Spezifikation einer standardisierten internen Schnittstelle ermöglicht es, Kommunikationsmodule unabhängig vom einzelnen Host-Gerät zu entwickeln und für viele verschiedene Host-Geräte wieder zu verwenden. Die interne Hardware-Architektur des Kommunikationsmoduls ist nicht relevant, solange die Schnittstelle zum Host-Gerät der Definition entspricht. Das gleiche gilt für das Host-Gerät, solange die Schnittstelle zum Kommunikationsmodul der Definition entspricht.

Weitere Einzelheiten, Vorteile und Merkmale der Erfindung ergeben sich nicht nur aus den Ansprüchen, den diesen zu entnehmenden Merkmalen - für sich und/oder in Kombination-, sondern auch aus der Zeichnung zu entnehmenden bevorzugten Ausführungsbeispielen.

Es zeigen:
- Fig. 1: die Anbindung eines Host-Gerätes an unterschiedliche Netzwerke,
- Fig. 2: eine schematische Darstellung eines Kommunikationsmoduls mit Schnittstelle zu dem Host-Gerät,
- Fig. 3: eine physikalische Sicht von Signalen eines 50-poligen Kompakt-Flächen-Steckers und
- Fig. 4: eine physikalische Sicht der Signale eines 30-poligen Steckers.

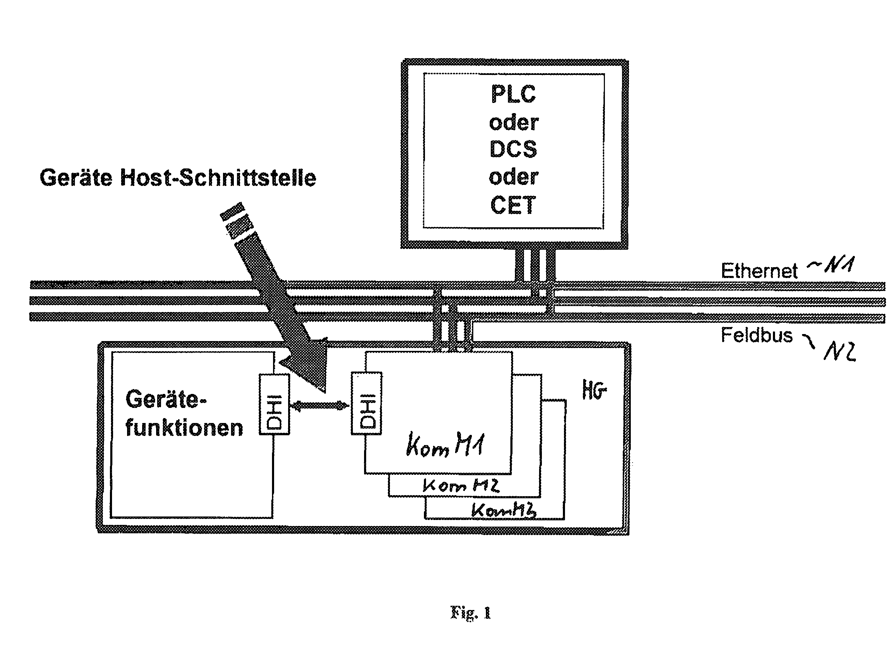

Fig. 1 zeigt ein elektrisches Host-Gerät HG, welches über ein Kommunikationsmodul KomM1, KomM2, KomM3 an unterschiedliche externe Netzwerke N1, N2 wie Ethernet oder Feldbus verbindbar ist. Das Kommunikationsmodul KomM1 ist über eine Schnittstelle DHI, die als Geräte-Host-Schnittstelle bezeichnet werden kann, mit dem Host-Gerät verbunden um dessen Gerätefunktionen zu nutzen und dem Netzwerk N1, N2 verfügbar zu machen. Mit dem Netzwerk N1, N2 können ebenfalls Zentralsteuerungen wie PLC. DCS und/oder CET verbunden sein.

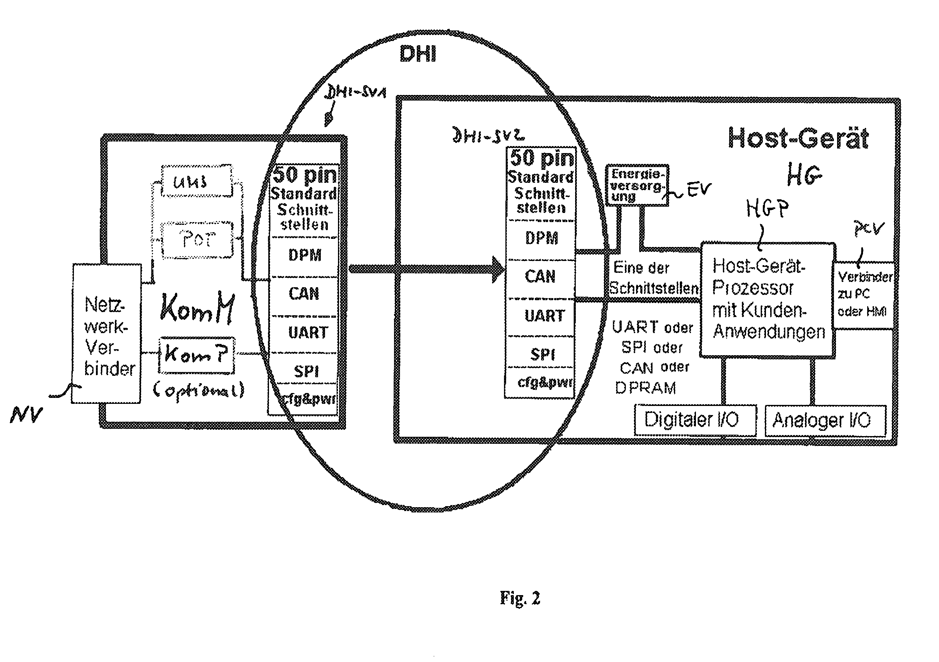

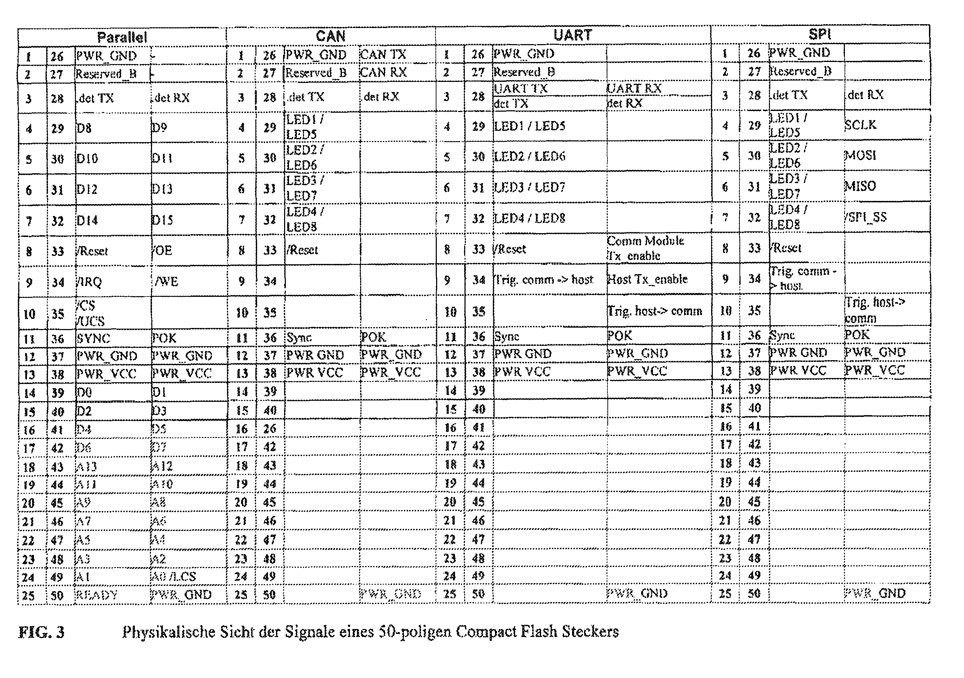

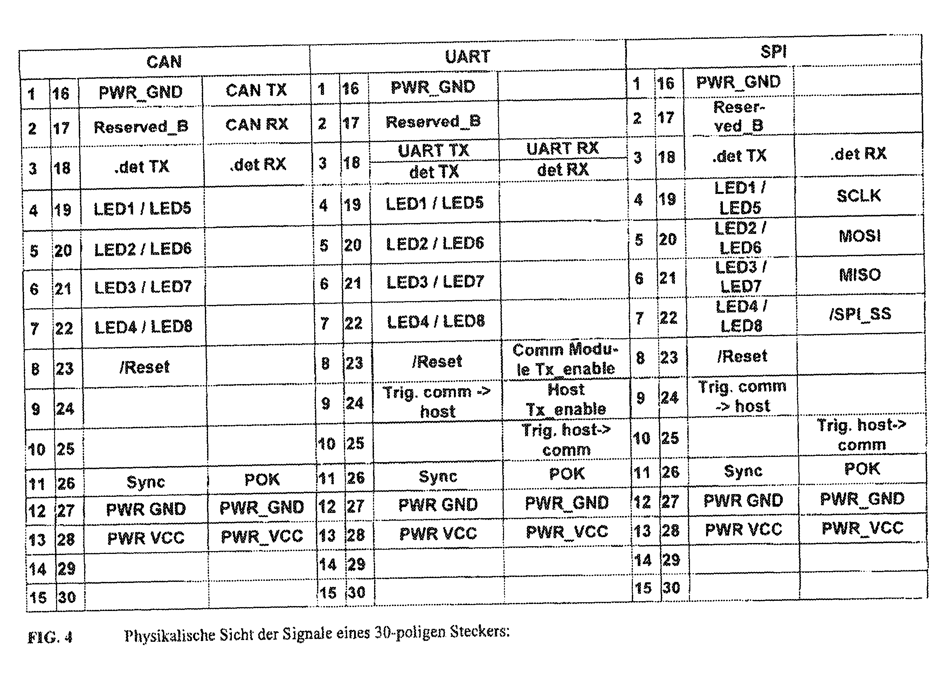

Die Host-Geräte-Schnittstelle DHI besteht aus mehreren Teilen, wie in Fig. 1 und 2 dargestellt ist. Diese umfasst eine Steckverbindung DHI-SV1, DHI-SV2, die vorzugsweise als 50-Pin Compact Flash Stecker oder 30-Pin Stecker ausgebildet ist. Die Steckerbelegung ist den Fig. 3 und 4 zu entnehmen. Über die Schnittstelle erfolgt eine Modul-Identifikation und grundlegende Hardware-Konfiguration.

Die Signale selbst können wie folgt gruppiert werden:
- DPM, 16-bit Daten Parallel-Schnittstelle
- UART auf physikalischer (Bit-)Ebene mit zusätzlichen Handshake-Signalen und Datenflusssteuerungssignalen
- SPI auf physikalischer (Bit-)Ebene mit zusätzlichen Handshake-Signalen
- CAN auf physikalischer Ebene
- Erkennungssignale
- Spannungsversorgung (PWR).

Einige Signale teilen sich dabei denselben physikalischen Steckerpin, was nur deshalb möglich ist, da diese Signale nicht zeitgleich benutzt werden. Insbesondere werden die Signale D8 bis D15 der Parallelschnittstelle mehrfach genutzt.

Ferner umfasst die Host-Geräte-Schnittstelle DHI mechanische Elemente wie Gehäuse, Leiterplatten, die nicht näher dargestellt wird.

Dieser Teil stellt die Austauschbarkeit der verschieden Kommunikationsmodule KomM1, KomM2, KomM3 sicher, d. h. die Verwendung eines Moduls für das Netzwerk N1 in mehreren verschiedenen Host-Geräten HG.

Des Weiteren ist der Schnittstelle DHI ein Schnittstellenprotokoll DHI-P zugeordnet, um über diese Schnittstelle zu kommunizieren. Dieses Protokoll läuft oberhalb der Treiber für die physikalische (Bit-)Ebene.

Im Unterschied zum Stand der Technik gibt die erfindungsgemäße Definition der Schnittstelle bzw. das Modul KomM nicht nur zwei physikalische Ebenen bzw. Schnittstellen vor, sondern vorzugsweise vier (16-bit parallele Daten, UART, SPI and CAN), von denen jede einzelne vom Host-Gerät HG ausgewählt werden kann.

Zusätzlich ermöglicht die erfindungsgemäße Definition die gleichzeitige Benutzung der parallelen Schnittstelle, der UART-Schnittstelle und einer einfachen CAN-Schnittstelle.

Außerdem ermöglicht die Definition des Steckers DHI-SV1, DHI-SV2 die Benutzung eines 50-poligen Steckers gemäß Fig. 3 als auch eines 30-poligen Steckers gemäß Fig. 4 und zwar derart, dass beide austauschbar sind.

Zudem erfolgen die Identifizierung des Kommunikationsmoduls KomM und die Auswahl der physikalischen Schnittstelle DPM, CAN, UART, SPI mit allen notwendigen Parametern nicht über statische Signale, sondern mittels einer seriellen Kommunikation über eine serielle Schnittstelle (Pin3 = .det TX und Pin 28 = .det RX des 50poligen Steckers sowie Pin 3 = .det TX und Pin 18 = .det RX des 30-poligen Steckers).

Die verwendeten Kommunikationsmodule KomM können sowohl aktiver Art sein, d. h., mit eigenem Kommunikationsprozessor KomP ausgestattet sein, auf dem das Schnittstellenprotokoll DHI-P abgewickelt wird, als auch von passiver Art sein, und zwar derart, dass nur Mittel UMS zur Umsetzung auf ein anderes physikalisches Medium sowie Mittel POT zur Potentialtrennung vorhanden sind.

In das Host-Gerät HG wird vorzugsweise nur eine der vorzugsweise vier physikalischen Schnittstellen DPM, CAN, UART, SPI sowie eine Identifikations- und Detektionsschnittstelle implementiert, wobei entweder der 50-polige Stecker oder der 30-polige Stecker verwendet wird.

Das Kommunikationsmodul KomM muss alles bereitstellen was notwendig ist, um über das externe Netzwerk N1, N2 , für welches es gedacht ist, zu kommunizieren. An der Host-Geräteschnittstelle DHI müssen alle definitiven physikalischen Teilschnittstellen DPM, CAN, UART, SPI oder nur eine Teilmenge implementiert sein.

Ein Kommunikationsmodul KomM mit einem 30-poligen Stecker kann von einem Host-Gerät HG benutzt werden, welches sowohl einen 30-poligen als auch einen 50-poligen Stecker besitzt.

Ein Kommunikationsmodul KomM mit einem 50-poligen Stecker kann nur von einem Host-Gerät HG benutzt werden, welches einen 50-poligen Stecker besitzt.

Nach dem Einschalten der Spannung EV wird das Host-Gerät HG das Kommunikationsmodul KomM unter Verwendung der Identifikations- und Erkennungs-Signale identifizieren. Dabei wird das Kommunikationsmodul KomM seine Signatur übergeben, welche Informationen über die implementierten physikalischen Teilschnittstellen (zum Host-Gerät) sowie die unterstützten Kommunikationsparameter enthält und ebenfalls darüber Auskunft gibt, ob es sich um ein aktives Modul (mit Schnittstellenprotokoll) DHI-P oder um ein passives Modul mit Medium-Umsetzer UMS und Potentialtrennung POT zum externen Netzwerk handelt.

Das Host-Gerät HG nimmt dann die Basis-Hardware-Konfiguration auf Grundlage der Signatur des Kommunikationsmoduls vor. Anschließend schaltet das Host-Gerät HG entweder auf das Schnittstellenprotokoll DHI-P um oder übernimmt die Steuerung des dummen Moduls.

Aktive Kommunikationsmodule KomM müssen jegliche Mittel bereitstellen, die nötig sind, um über das externe Netzwerk N1, N2 zu kommunizieren, aber auch ein Mittel wie Mikro-Prozessor KomP um mittels des High-Level-Protokolls DHI-P jegliche Art vom Information zwischen dem externen Netzwerk N1, N2 und dem Host-Gerät HG austauschen zu können.

Passive Kommunikationsmodule KomM müssen die Potentialtrennung und die Umsetzung auf das Medium des externen Netzwerkes N1, N2 zur Verfügung stellen als auch alle Mittel, die es dem Host-Gerät ermöglichen, die Signatur des Kommunikationsmoduls über die Host-Schnittstelle zu lesen. Außerdem müssen Mittel bereitgestellt werden, die es dem Host-Gerät möglich machen, die dem externen Netzwerk zugeordneten optischen Anzeigen wie LEDs auf dem Kommunikationsmodul zu steuern.

Die Geräte-Host-Schnittstelle DHI definiert eine Schnittstelle zwischen irgendeinem Host-Gerät HG und einer modularen Option, welches Zugriff auf jegliches externes Netzwerk N1, N2 ermöglicht.

Die Schnittstelle DHI ist vorzugsweise eine geräteinteme Schnittstelle. Alle Signale sind für die direkte Kommunikationsverbindung zwischen Prozessoren definiert, deshalb müssen keine Transceiver benutzt werden.

Die Schnittstelle DHI erlaubt es, dass:
- Host-Gerät HG und Kommunikationsmodul KomM jeweils einen Mikroprozessor KomP, HGP verwenden, um ein Schnittstellenprotokoll DHI-P zum Datenaustausch zu betreiben. In diesem Fall wird das Kommunikationsmodul KomM "aktives Kommunikationsmodul" genannt;
- nur das Host-Gerät HG einen Mikroprozessor ohne Schnittstellenprotokoll DHI-P zum Datenaustausch besitzt, jedoch zur Steuerung des Kommunikationsmodul. In diesem Fall wird das Kommunikationsmodul "passives Kommunikationsmodul" genannt.
   - Die Schnittstellensignale sind für parallele und serielle Teilschnittstellen definiert. Serielle Teilschnittstellen sind UART, SPI und CAN.
   - Die Schnittstellensignale sind definiert für einen 50-poligen Stecker und - ohne physikalische Parallelschnittstelle - auch für einen 30-poligen Stecker derart, dass Mo-Module mit einem 30-poligen Stecker und Geräte mit einem 50-poligen Stecker interoperabel sind und umgekehrt,
   - Kommunikationsmodul KomM zur Bereitstellung aller oder einzelner TeilSchnittstellen.
   - Host-Geräte HG, die nur eine oder mehrere Teilschnittstellen zu Verfügung stellen.
   - Identifizierung des Kommunikationsmoduls KomM über die einfache serielle Schnittstelle (serielle Signatur).
- Basis-Hardware-Konfiguration, d. h. Auswahl der physikalischen Teilschnittstelle und Übertragungsparameter, erfolgt über die einfache serielle Schnittstelle.
- Nach erfolgter Basis-Hardware-Konfiguration wird das Schnittstellenprotokoll DHI-P aktiviert.

## Patentansprüche

1. Kommunikationsmodul (KomM) zur Anbindung von elektrischen Holt-Geräten (HG) mit jeweils individueller physikalischer Schnittstelle (DPM, UART, SPI, CAN) an ein externes Netzwerk (N1, N2), wobei das Kommunikationsmodul (KomM) über eine Schnittstelle (DHI) mit dem Host-Gerät (HG) und über einen angepassten Netzwerk-Verbinder (NV) mit dem jeweiligen externen Netzwerk (N1, N2) verbindbar ist, wobei das Kommunikationsmodul (KomM) zumindest zwei physikalische Schnittstellen (DPM, UART, SPI, CAN) bereitstellt, von denen eine als serielle Schnittstelle (UART) ausgebildet ist, über die eine serielle Kommunikation zwischen dem Kommunikationsmodul (KomM) und dem Host-Gerät (HG) ermöglicht wird und wobei die Schnittstelle (DHI) zumindest einen elektrischen Verbinder aufweist, über den eine der zumindest zwei physikalischen Schnittstellen (DPM, UART, SPI, CAN) mittels des Host-Geräts (HG) auswählbar ist,
**dadurch gekennzeichnet,**
**dass** der zumindest eine elektrische Verbinder (PIN3, PIN18; PIN3, PIN28) Bestandteil der seriellen Schnittstelle (UART) des Kommunikationsmoduls (KomM) ist, dass das Kommunikationsmodul (KomM) eine von dem Host-Gerät (HG) über die serielle Schnittstelle (UART) lesbare Signatur aufweist, welche Informationen über die in dem Kommunikationsmodul (KomM) implementierten physikalischen Schnittstellen (DPM, UART, SPI, CAN) sowie Kommunikationsparameter enthält und dass die Identifizierung des Kommunikationsmoduls (KomM) sowie die Auswahl der zumindest einen für das Host-Gerät (HG) geeigneten physikalischen Schnittstelle (DPM, UART, SPI, CAN) mittels serieller Kommunikation über die serielle Schnittstelle (UART) durch das Host-Gerät (HG) ausführbar ist.

2. Kommunikationsmodul nach Anspruch 1,
**dadurch gekennzeichnet,**
**dass** das Kommunikationsmodul (KomM) einen Kommunikationsprozessor (KomP) aufweist, über den mittels eines Schnittstellenprotokolls (DHI-P) jegliche Art von Information zwischen dem externen Netzwerk (N1, N2) und dem Host-Gerät (HG) austauschbar ist.

3. Kommunikationsmodul nach Anspruch 1,
**dadurch gekennzeichnet,**
**dass** das Kommunikationsmodul (KomM) Mittel zur Potenzialtrennung und/oder Mittel zur Umsetzung von Signalen auf ein Medium des externen Netzwerkes (N1, N2) aufweist.

4. Kommunikationsmodul nach zumindest einem der vorgehenden Ansprüche,
**dadurch gekennzeichnet,**
**dass** das Kommunikationsmodul (KomM) als integraler Bestandteil des Host-Gerätes (HG) implementiert ist.

5. Kommunikationsmodul nach zumindest einem der vorgehenden Ansprüche,
**dadurch gekennzeichnet,**
**dass** die Schnittstelle (DHI) als 50-poliger oder 30-poliger Steckverbinder (DHI-SV1; DHI-SV2) ausgebildet ist.

6. Kommunikationsmodul nach zumindest einem der vorgehenden Ansprüche,
**dadurch gekennzeichnet,**
**dass** die serielle Schnittstelle als UART, SPI oder CAN und/oder die Parallel-Schnittstelle als DPM ausgebildet ist.

7. Verfahren zur Anbindung von elektrischen Geräten (DH) mit jeweils individueller physikalischer Schnittstelle (DPM, UART, SPI, CAN) über ein Kommunikationsmodul (KomM) an ein externes Netzwerk (N1, N2), wobei das Kommunikationsmodul (KomM) über eine Schnittstelle (DHI) mit dem elektrischen Gerät (DH) und über einen angepassten Netzwerk-Verbinder (NV) mit dem jeweiligen externen Netzwerk (N1, N2) verbindbar ist, wobei das Kommunikationsmodul zumindest zwei physikalische Schnittstellen (DPM, UART, SPI, CAN) bereitstellt, von denen eine als serielle Schnittstelle (UART) ausgebildet ist, über die eine serielle Kommunikation zwischen dem Kommunikationsmodul (KomM) und dem Host-Gerät (HG) ermöglicht wird und die Schnittstelle (DHI) zumindest einen elektrischen Verbinder aufweist, über den eine der zumindest zwei physikalischen Schnittstellen (DPM, UART, SPI, CAN) mittels des Host-Gerätes (HG) ausgewählt wird und wobei die übertragenen Signale durch das Kommunikationsmodul (KomP) an das jeweilige externe Netzwerk (N) angepasst werden,
**dadurch gekennzeichnet,**
**dass** der zumindest eine elektrische Verbinder (PIN3, PIN18; PIN3, PIN28) Bestandteil der seriellen Schnittstelle (UART) des Kommunikationsmoduls (KomM) ist, dass das Kommunikationsmodul (KomM) eine Signatur über die serielle Schnittstelle (UART) an das Host-Gerät (HG) sendet, welche Informationen über die in dem Kommunikationsmodul (KomM) implementierten physikalischen Schnittstellen (DPM, UART, SPI, CAN) sowie Kommunikationsparameter enthält und dass die Identifizierung des Kommunikationsmoduls (KomM) sowie die Auswahl der zumindest einen für das Host-Gerät (HG) geeigneten physikalischen Schnittstelle (DPM, UART, SPI, CAN) mittels serieller Kommunikation über die serielle Schnittstelle (UART) durch das Host-Gerät ausgeführt wird.

8. Verfahren nach Anspruch 7,
**dadurch gekennzeichnet,**
**dass** die von dem Kommunikationsmodul (KomM) an das Host-Gerät (HG) übertragene Signatur Auskunft darüber enthält, ob es sich bei dem Kommunikationsmodul (KomM) um ein aktives Kommunikationsmodul mit einem Schnittstellenprotokoll (DHI-P) oder ein passives Kommunikationsmodul mit Medium-Umsetzer und/oder Potenzialtrennung zum externen Netzwerk handelt.

9. Verfahren nach Anspruch 8,
**dadurch gekennzeichnet,**
**dass** das Host-Gerät (HG) entsprechend der Signatur auf das aktive Schnittstellenprotokoll (DHI-P) umschaltet oder die Steuerung des passiven Kommunikationsmoduls übernimmt.

10. Verfahren nach zumindest einem der Ansprüche 8 oder 9,
**dadurch gekennzeichnet,**
**dass** ein Datenaustausch zwischen dem Host-Gerät (HG) und dem externen Netzwerk (N1, N2) über das in dem Kommunikationsprozessor ablaufende Schnittstellenprotokoll (DHI-P) ausgeführt wird.

11. Verfahren nach zumindest Anspruch 8,
**dadurch gekennzeichnet,**
**dass** das passive Kommunikationsmodul (KomM) durch das Host-Gerät (HG) gesteuert wird, wobei eine Umsetzung der übertragenen Signale auf das physikalische Medium des externen Netzwerks (N1, N2) und/oder eine Potenzialtrennung in dem Kommunikationsmodul (KomM) abläuft.

12. Verfahren nach zumindest einem der Ansprüche 8 bis 11,
**dadurch gekennzeichnet,**
**dass** die zwischen dem Host-Gerät (HG) und dem Kommunikationsmodul (KomM) ausgetauschten Signale für die direkte Kommunikationsverbindung zwischen Prozessoren definiert sind.

13. Verfahren nach zumindest einem der Ansprüche 8 bis 12,
**dadurch gekennzeichnet,**
**dass** die seriellen Signale nach UART-, SPI-, und CAN-Standard übertragen werden.

## Claims

1. Communication module (KomM) for the connection of electric host-devices (HG) with respective individual physical interface (DPM, UART, SPI, CAN) to an external network (N1, N2), wherein the communication module (KomM) is connectable with the host device (HG) by means of an interface (DHI) and via an adapted network connector (NV) with the respective external network (N1, N2), wherein the communication module (KomM) provides at least two physical interfaces (DPM, UART, SPI, CAN), one of which is a serial interface (UART) which enables a serial communication between the communication module (KomM) and the host device (HG), and wherein the interface (DHI) features at least one electric connector, via which one of the at least two physical interfaces (DPM, UART, SPI, CAN) is selectable by means of the host device (HG),
**characterized in**
**that** the at least one electric connector (PIN3, PIN18; PIN3, PIN28) is part of the serial interface (UART) of the communication modulue (KomM), that the communication module (KomM) features a signature that is readable by the host device (HG) by means of the serial interface (UART) and contains information regarding the physical interfaces (DPM, AURT, SPI, CAN) that are implemented in the communication module (KoM) as well as communication parameter, and that the identification of the communication module (KomM) as well as the selection of the at least one physical interface (DPM, UART, SPI, CAN) that is suitable for the host device (HG) is executable by means of serial communication via the serial interface (UART) by means of the host device (HG).

2. Communication module according to claim 1,
**characterized in**
**that** the communication module (KomM) features a communication processor (KomP), via which by means of an interface protocol (DHI-P) any kind of information can be exchanged between the external network (N1, N2) and the host device (HG).

3. Communication module according to claim 1,
**characterized in**
**that** the communication module (KomM) features means for electrical isolation and/or means for converting signals to a medium of the external network (N1, N2).

4. Communication module according to at least one of the previous claims,
**characterized in**
**that** the communication module (KomM) is implemented as an integral component of the host device (HG).

5. Communication module according to at least one of the previous claims,
**characterized in**
**that** the interface (DHI) is a 50-pole or 30-pole plug-in connector (DHI-SV1; DHI-SV2).

6. Communication module according to at least one of the previous claims,
**characterized in**
**that** the serial interface is a UART, SP1 or CAN and/or the parallel interface is a DPM.

7. Method for the connection of electric devices (DH) with respective individual physical interface (DPM, UART, SPI, CAN) by means of a communication module (KomM) to an external network (N1, N2), wherein the communication module (KomM) is connectable with the electric device (DH) by means of an interface (DHI) and is connectable with the respective external network (N2, N2) via an adapted network connector (NV), wherein the communication module provides at least two physical interfaces (DPM, UART, SPI, CAN), one of which is a serial interface (UART), via which a serial communication between the communication module (KomM) and the host device (HG) is made possible and the interface (DHI) features at least one electrical connector, via which one of the at least two physical interfaces (DPM, UART, SPI, CAN) is selectable by means of the host device (HG) and wherein the transmitted signals are adapted to the respective external network (N) by the communication module (KomM),
**characterized in**
**that** the at least one electric connector (PIN3, PIN18; PIN3, PIN28) is part of the serial interface (UART) of the communication module (KomM), that the communication module (KomM) transmits a signature containing information regarding the physical interfaces (DPM, UART, SPI, CAN) implemented in the communication module (KomM) as well as communication parameter via the serial interface (UART) to the host device (HG), and that the identification of the communication module (KomM) as well as the selection of the at least one interface (DPM, UART, SPI, CAN) suitable for the host device (HG) is executed by the host device by means of serial communication via the serial interface (UART).

8. Method according to claim 7,
**characterized in**
**that** the communication module (KomM) transmits a signature to the host device (HG), wherein the signature contains information regarding whether the communication module (KomM) is an active communication module with an interface protocol (DHI-P) or a passive communication module with a medium converter and/or electrical isolation to the external network.

9. Method according to claim 8,
**characterized in**
**that** the host device (HG) switches on the basis of the received signature to the active interface protocol or starts the control of the passive communication module.

10. Method according to at least one of the claims 8 or 9,
**characterized in**
**that** a data exchange between the host device (HG) and the external network (N1, N2) is accomplished via an interface protocol (DHI-P) that executes on the communication processor.

11. Method according to claim 8,
**characterized in**
**that** the host device (HG) takes over the control of the passive communication module, wherein a conversion of the transmitted signals to the physical medium of the external network (N1, N2) and/or an electrical isolation executes in the communication module (KomM).

12. Method according to at least one of the claims 8 to 11,
**characterized in**
**that** the signals that are exchanged between the host device (HG) and the communication module (KomM) are defined for the direct communication connection between processors.

13. Method according to at least one of the claims 8 to 12,
**characterized in**
**that** the serial signals are transmitted according to UART-, SPI- and CAN-standard.

## Revendications

1. Module de communication (KomM) destiné à connecter à un réseau externe (N1, N2) des appareils hôtes électriques (HG) munis respectivement d'une interface physique individuelle (DPM, UART, SPI, CAN), sachant que le module de communication (KomM) peut être relié à l'appareil hôte (HG) via une interface (DHI) et à chaque réseau externe (N1, N2) via un connecteur de réseau adapté (NV), que le module de communication (KomM) met à disposition au moins deux interfaces physiques (DPM, UART, SPI, CAN), dont l'une est conçue en tant qu'interface sérielle (UART) via laquelle est rendue possible une communication sérielle entre le module de communication (KomM) et l'appareil hôte (HG) et que l'interface (DHI) présente au moins un connecteur électrique, via lequel l'une des au moins deux interfaces physiques (DPM, UART, SPI, CAN) peut être sélectionnée au moyen de l'appareil hôte (HG),
**caractérisé en ce**
**que** l'au moins un connecteur électrique (PIN3, PIN18 ; PIN3, PIN28) fait partie de l'interface sérielle (UART) du module de communication (KomM), que le module de communication (KomM) présente une signature lisible par l'appareil hôte (HG) via l'interface sérielle (UART), ladite signature contenant des informations sur les interfaces physiques (DPM, UART, SPI, CAN) implémentées dans le module de communication (KomM) ainsi que des paramètres de communication, et que l'identification du module de communication (KomM) ainsi que la sélection de l'au moins une interface physique (DPM, UART, SPI, CAN) appropriée pour l'appareil hôte (HG) peuvent être exécutées par l'appareil hôte (HG) au moyen de communication sérielle via l'interface sérielle (UART).

2. Module de communication selon la revendication 1,
**caractérisé en ce**
**que** le module de communication (KomM) présente un processeur de communication (KomP), par l'intermédiaire duquel tout type d'information peut être échangé entre le réseau externe (N1, N2) et l'appareil hôte (HG) au moyen d'un protocole d'interface (DHI-P).

3. Module de communication selon la revendication 1,
**caractérisé en ce**
**que** le module de communication (KomM) présente des moyens de séparation de potentiel et/ou des moyens de conversion de signaux sur un média du réseau externe (N1, N2).

4. Module de communication selon au moins une des revendications précédentes,
**caractérisé en ce**
**que** le module de communication (KomM) est implémenté en tant que partie intégrante de l'appareil hôte (HG).

5. Module de communication selon au moins une des revendications précédentes,
**caractérisé en ce**
**que** l'interface (DHI) est conçue en tant que connecteur enfichable (DHI-SV1 ; DHI-SV2) à 50 broches ou à 30 broches.

6. Module de communication selon au moins une des revendications précédentes,
**caractérisé en ce**
**que** l'interface sérielle est conçue en tant que UART, SPI ou CAN et/ou que l'interface parallèle est conçue en tant que DPM.

7. Procédé destiné à connecter à un réseau externe (N1, N2) via un module de communication (KomM) des appareils électriques (DH) munis respectivement d'une interface physique individuelle (DPM, UART, SPI, CAN), sachant que le module de communication (KomM) peut être relié à l'appareil électrique (DH) via une interface (DHI) et à chaque réseau externe (N1, N2) via un connecteur de réseau adapté (NV), que le module de communication (KomM) met à disposition au moins deux interfaces physiques (DPM, UART, SPI, CAN), dont l'une est conçue en tant qu'interface sérielle (UART) via laquelle est rendue possible une communication sérielle entre le module de communication (KomM) et l'appareil hôte (HG), et que l'interface (DHI) présente au moins un connecteur électrique, via lequel l'une des au moins deux interfaces physiques (DPM, UART, SPI, CAN) est sélectionnée au moyen de l'appareil hôte (HG), et que les signaux transmis sont adaptés à chaque réseau externe (N) par le module de communication (KomM),
**caractérisé en ce**
**que** l'au moins un connecteur électrique (PIN3, PIN18 ; PIN3, PIN28) fait partie de l'interface sérielle (UART) du module de communication (KomM), que le module de communication (KomM) envoie une signature à l'appareil hôte (HG) via l'interface sérielle (UART), ladite signature contenant des informations sur les interfaces physiques (DPM, UART, SPI, CAN) implémentées dans le module de communication (KomM) ainsi que des paramètres de communication, et que l'identification du module de communication (KomM) ainsi que la sélection de l'au moins une interface physique (DPM, UART, SPI, CAN) appropriée pour l'appareil hôte (HG) sont exécutées par l'appareil hôte au moyen de communication sérielle via l'interface sérielle (UART).

8. Procédé selon la revendication 7,
**caractérisé en ce**
**que** la signature transmise par le module de communication (KomM) à l'appareil hôte (HG) contient une information permettant de savoir si le module de communication (KomM) est un module de communication actif avec un protocole d'interface (DHI-P) ou un module de communication passif avec convertisseur de média et/ou séparation de potentiel par rapport au réseau externe.

9. Procédé selon la revendication 8,
**caractérisé en ce**
**qu'**en fonction de la signature, l'appareil hôte (HG) commute sur le protocole d'interface actif (DHI-P) ou prend en charge la gestion du module de communication passif.

10. Procédé selon la revendication 8 ou 9,
**caractérisé en ce**
**qu'**est effectué un échange de données entre l'appareil hôte (HG) et le réseau externe (N1, N2) au moyen du protocole d'interface (DHI-P) se déroulant dans le processeur de communication.

11. Procédé selon au moins la revendication 8,
**caractérisé en ce**
**que** le module de communication passif (KomM) est géré par l'appareil hôte (HG), sachant que se déroule dans le module de communication (KomM) une conversion des signaux transmis sur le média physique du réseau externe (N1, N2) et/ou une séparation de potentiel.

12. Procédé selon au moins une des revendications 8 à 11,
**caractérisé en ce**
**que** les signaux échangés entre l'appareil hôte (HG) et le module de communication (KomM) sont définis pour la liaison de communication directe entre processeurs.

13. Procédé selon au moins une des revendications 8 à 12,
**caractérisé en ce**
**que** les signaux sériels sont transmis selon les normes UART, SPI, et CAN.
